# EUROPÄISCHE PATENTSCHRIFT

(11) **EP 4 017 783 B1**
(45) Veröffentlichungstag und Bekanntmachung des Hinweises auf die Patenterteilung: **02.08.2023**
(21) Anmeldenummer: 20754727.4
(22) Anmeldetag: 11.08.2020
(51) Int. Cl.: B62D 5/00, B62D 1/16

(54) **LENKSÄULE FÜR EIN KRAFTFAHRZEUG MIT UMDREHUNGSBEGRENZUNG**
STEERING COLUMN FOR A MOTOR VEHICLE WITH ROTATION LIMITATION
COLONNE DE DIRECTION POUR UN VÉHICULE À MOTEUR AVEC UNE LIMITATION DE ROTATION

(30) Priorität: 20.08.2019 DE 102019122320
(43) Veröffentlichungstag der Anmeldung: 29.06.2022
(73) Patentinhaber: thyssenkrupp Presta AG, 9492 Eschen (LI); thyssenkrupp AG, 45143 Essen (DE)
(72) Erfinder: GALEHR, Robert, 9486 Schaanwald (LI); REITER, Gerald, 5061 Elsbethen (AT)
(74) Vertreter: thyssenkrupp Intellectual Property GmbH
(86) Internationale Anmeldenummer: PCT/EP2020/072442
(87) Internationale Veröffentlichungsnummer: WO 2021/032526

(56) Entgegenhaltungen:
- EP-A1- 3 476 692
- DE-A1- 10 017 049
- DE-B3-102013 014 138

## Beschreibung

Die vorliegende Erfindung betrifft eine Lenksäule für ein Kraftfahrzeug mit den Merkmalen des Oberbegriffs des Anspruchs 1.

Solche Lenksäulen kommen bevorzugt bei Steer-by-Wire-Lenksystemen zum Einsatz, bei denen es keine direkte mechanische Kopplung zwischen dem Lenkrad bzw. der Lenkwelle und dem Lenkgestänge gibt und die Kraftfahrzeugräder werden direkt mit Hilfe eines Servomotors, der Bestandteil des Feedback-Aktuators ist, bewegt. Der maximale Einschlagwinkel des Lenkrades ist daher nicht mehr über mechanische Anschläge im Lenkgetriebe definiert. Der maximale Lenkwinkeleinschlag der Räder ist in Steer-by-Wire-Systemen aber dennoch beschränkt. Dem Fahrer ist daher anzuzeigen, wann ein maximaler Lenkeinschlag erreicht wird. Im einfachsten Fall kann ein mechanischer Lenkanschlag verwendet werden, welcher den maximalen Einschlagwinkel des Lenkrades auf einen bestimmten Winkel begrenzt.

Aus der Offenlegungsschrift DE 10 312 516 A1 ist eine Lenksäule mit einer mechanischen Umdrehungsbegrenzung bekannt. Die Umdrehungsbegrenzung weist zwei Scheiben mit jeweils einer Spiralbahn auf, wobei zwischen den Spiralbahnen eine Kugel angeordnet ist. Die Kugel verlagert sich bei der Lenkwellenrotation in den Spiralbahnen. Nachteil dieser Lösung ist die hohe Toleranzanfälligkeit. Die Kugeln können in den Spiralbahnen klappern und bei einem Missbrauch kann die Umdrehungsbegrenzung klemmen, so dass die Führung des Kraftfahrzeugs beeinträchtigt ist.

Aus der DE 10 2013 014138 B3 ist eine gattungsgemäße Lenksäule bekannt.

Es ist daher Aufgabe der Erfindung, eine Lenksäule für ein Kraftfahrzeug mit einer verbesserten Umdrehungsbegrenzung anzugeben, die einen sicheren Betrieb gewährleistet und eine geringe Klapperneigung aufweist.

Diese Aufgabe wird von einer Lenksäule für ein Kraftfahrzeug mit den Merkmalen des Anspruchs 1 gelöst. Vorteilhafte Weiterbildungen der Erfindung können den Unteransprüchen entnommen werden.

Demnach ist eine Lenksäule für ein Kraftfahrzeug umfassend eine Lenkwelle, die in einer Lenkwellenlagereinheit drehbar gelagert ist, und eine Umdrehungsbegrenzungseinrichtung, die dazu eingerichtet ist, ein Verdrehen der Lenkwelle zu begrenzen, wobei die Umdrehungsbegrenzungseinrichtung einen an einem Ende der Lenkwelle befestigten Kulissenträger mit wenigstens einer spiralförmigen Kulissenbahn aufweist, und wobei in der wenigstens einen Kulissenbahn ein Kulissenstein verlagerbar geführt ist, und wobei der Kulissenstein mit einem Hebel gekoppelt ist, der verkippbar an der Lenkwellenlagereinheit gehalten ist, vorgesehen, wobei der Hebel wenigstens einen Gegenanschlag aufweist, der mit einem an der Lenkwelle befestigten Anschlagbauteil zur Drehbegrenzung der Drehung der Lenkwelle in Wirkeingriff bringbar ist.

Durch das Bereitstellen eines Anschlages ist ein sicherer Betrieb der Umdrehungsbegrenzungseinrichtung gewährleistet. Das Auftreten von Klappergeräuschen kann zudem vermieden werden.

Es ist vorteilhaft, wenn der Kulissenträger mit der Lenkwelle drehmomentenschlüssig gekoppelt ist. Besonders bevorzugt ist der Kulissenträger auf einer Innenwelle der Lenkwelle angeordnet. Der Kulissenträger ist bevorzugt als eine Scheibe ausgebildet, wobei die spiralförmige Kulissenbahn auf einer Oberseite aufgebracht ist. Die spiralförmige Kulissenbahn ist vorzugsweise nutförmig oder rillenförmig.

Die Lenkwelle umfasst bevorzugt eine Außenwelle, in der eine Innenwelle verschiebbar aufgenommen ist, wobei die Außenwelle mit der Innenwelle, bevorzugt unter Zwischenschaltung einer bevorzugt aus Kunststoff gebildeten Hülse, drehmomentenschlüssig gekoppelt sind. Die Innenwelle kann als Vollwelle oder als Hohlwelle ausgebildet sein. Ein Ende der Lenkwelle weist einen Koppelabschnitt auf, der mit einem Lenkhandhabe, auch als Lenkrad bezeichnet, drehmomentenschlüssig koppelbar ist.

Bevorzugt ist die Lenkwellenlagereinheit als Mantelrohr oder Führungskasten ausgebildet. Bevorzugt ist die Lenkwellenlagereinheit direkt oder indirekt, unter Zwischenschaltung eines oder mehrerer Mantelrohre und/oder einer Montagehalterung, mit dem Kraftfahrzeug verbindbar.

Bevorzugt ist das Anschlagbauteil auf der kulissenbahnfernen Seite des Kulissenträgers angeordnet und weist einen zylindrischen Grundkörper mit wenigstens einem Fortsatz auf, der einen Anschlag ausbildet. Der Fortsatz erstreckt sich bevorzugt in Radialrichtung zur Längsachse der Lenkwelle. Den Anschlag bildet bevorzugt eine Seitenfläche des Fortsatzes aus.

In einer bevorzugten Ausführungsform weist der Kulissenträger zwei spiralförmige Kulissenbahnen auf, wobei in jeder der beiden Kulissenbahnen ein Kulissenstein verschiebbar geführt ist, der jeweils an einem Hebel befestigt ist und wobei beide Hebel verkippbar an der Lenkwellenlagereinheit gehalten sind. Die Hebel können dabei die Verdrehung der Lenkwelle in die gleiche oder entgegengesetzte Richtungen begrenzen.

Es kann auch vorgesehen sein, dass ein Hebel zwei Gegenanschläge aufweist, wobei jeder nur in einer Drehrichtung mit dem Anschlagbauteil in Wirkeingriff bringbar ist, derart, dass die Verdrehung der Lenkwelle in beide Richtungen begrenzt ist. Für den Fall, dass zwei Hebel vorgesehen sind, wird somit die Verdrehung der Lenkwelle in beide Richtungen von beiden Hebeln begrenzt. Dank dieser Maßnahme kann eine Redundanz bereitgestellt werden. Außerdem können auch höhere Drehmomente, die in die Lenkwelle in der Anschlagsituation eingeleitet werden, abgestützt werden. Somit kann eine ungewollte Beschädigung der Drehbegrenzungseinrichtung im Missbrauchsfall verhindert werden.

Vorzugsweise liegen sich die beiden Hebel in Umfangsrichtung um die Lenkwelle gegenüber. Die Hebel und die Kulissenbahn sind derart ausgebildet, dass beide Hebel mit ihrem Gegenanschlag bei demselben Drehwinkel der Lenkwelle mit jeweils einem Anschlag des Anschlagbauteils in Wirkeingriff bringbar sind. Die beiden Hebel stellen somit ein redundantes System dar. Durch das Vorsehen von zwei Hebeln, kann die beim Lenkanschlag auftretende Kraft verteilt werden, so dass eine stabilere Umdrehungsbegrenzungseinrichtung bereitgestellt werden kann.

Das Anschlagbauteil weist bevorzugt zwei Fortsätze mit jeweils zwei gegenüberliegenden Anschlägen auf, so dass die Verdrehung der Lenkwelle für beide Hebel jeweils in beide Richtungen begrenzt ist.

In einer bevorzugten Ausführungsform ist der Kulissenstein als ein stiftförmiges Element ausgebildet. Dabei ist es vorteilhaft, wenn das stiftförmige Element mit dem Hebel und den Gegenanschlägen als ein einstückiges integrales Bauteil ausgebildet ist.

Vorzugsweise ist an den Anschlägen des Anschlagbauteils und/oder den Gegenanschlägen ein Dämpfungskörper angeordnet, um ein Anschlagen zu dämpfen. Der Dämpfungskörper ist bevorzugt aus einem Kunststoff und/oder einem Elastomer gebildet. Dank dieser Maßnahme können die haptischen und akustischen Eigenschaften der Umdrehungsbegrenzungseinrichtung weiter verbessert werden.

Bevorzugt ist die Lenksäule für ein Steer-by-Wire-Lenksystem eines Kraftfahrzeugs vorgesehen. Bevorzugt kann die Lenkwelle mit einem Handmomenten-Steller (Feedback-Aktuator) gekoppelt sein, der den Fahrzeugführer eine Rückmeldung über die Fahrbahnbeschaffenheit und andere Einflüsse vermittelt und eine Rückstellung der Lenkwelle in die Geradeausstellung bewirkt.

Weiterhin ist ein Steer-by-Wire-Lenksystem eines Kraftfahrzeuges mit einer zuvor beschriebenen Lenksäule vorgesehen.

Eine bevorzugte Ausführungsform der Erfindung wird nachfolgend anhand der Zeichnungen näher erläutert. Für gleiche oder funktionsgleiche Elemente werden in allen Zeichnungen die gleichen Bezugszeichen verwendet, diese werden daher in der Regel auch nur einmal in der Beschreibung benannt bzw. erwähnt. Es zeigen:
- Fig. 1:: eine räumliche Darstellung einer Lenksäule ,
- Fig. 2:: eine räumliche Ansicht der Lenksäule aus Fig. 1 in Draufsicht auf eine Umdrehungsbegrenzungseinrichtung,
- Fig. 3:: eine Detailansicht der Fig. 2,
- Fig. 4:: eine Explosionszeichnung der Umdrehungsbegrenzungseinrichtung,
- Fig. 5:: eine Draufsicht auf die Umdrehungsbegrenzungseinrichtung in Geradeausstellung des Lenkrades,
- Fig. 6:: eine räumliche Darstellung der Komponenten der Umdrehungsbegrenzungseinrichtung in Geradeausstellung des Lenkrades,
- Fig. 7:: eine Draufsicht auf die Umdrehungsbegrenzungseinrichtung beim Linksanschlag des Lenkrades,
- Fig. 8:: eine räumliche Darstellung der Komponenten der Umdrehungsbegrenzungseinrichtung beim Linksanschlag des Lenkrades,
- Fig. 9:: eine Draufsicht auf die Umdrehungsbegrenzungseinrichtung beim Rechtsanschlag des Lenkrades, sowie
- Fig. 10:: eine räumliche Darstellung der Komponenten der Umdrehungsbegrenzungseinrichtung beim Rechtsanschlag des Lenkrades.

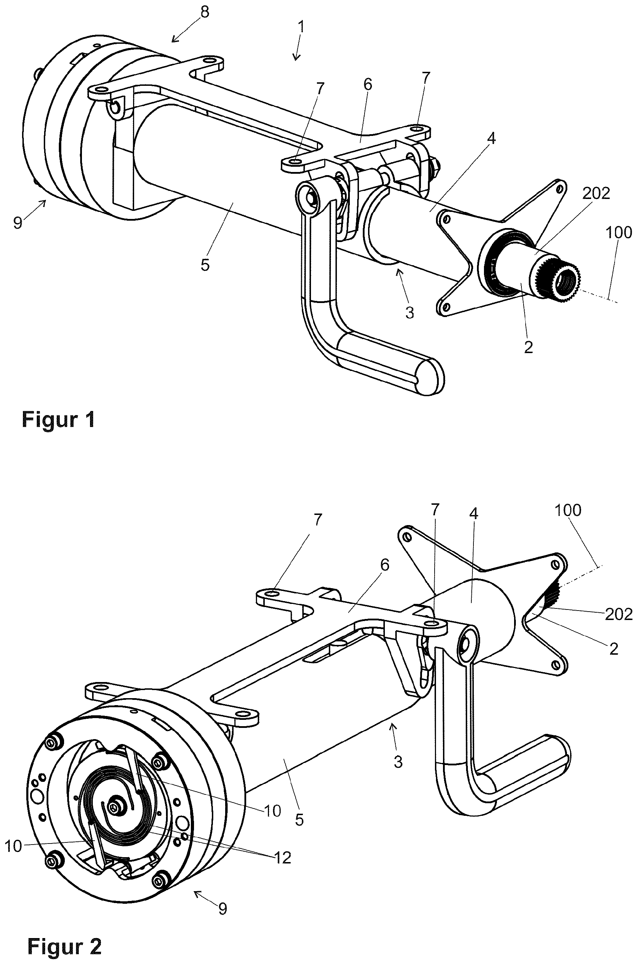

Die Figuren 1 und 2 veranschaulichen eine Lenksäule 1 für ein Kraftfahrzeug, aufweisend eine Lenkwelle 2, die um ihre Drehachse 100 drehbar in einer Lenkwellenlagereinheit 3, aufweisend ein inneres Mantelrohr 4 und ein äußeres Mantelrohr 5, gelagert ist. Das innere Mantelrohr 4 ist in dem äußeren Mantelrohr 5 entlang der Längsachse, gleichbedeutend mit der Drehachse, der Lenkwelle 2 aufgenommen und verschiebbar geführt. Das äußere Mantelrohr 5 ist um eine Schwenkachse in einem Halteteil 6 schwenkbar gelagert. Das Halteteil 6 kann in Befestigungspunkten 7 an der nicht dargestellten Karosserie des Kraftfahrzeugs befestigt werden.

Außerdem weist die Lenksäule eine Fixiereinrichtung 54 auf, die zwischen einer Freigabestellung und einer Fixierstellung umschaltbar ist, wobei in der Fixierstellung das innere Mantelrohr 4 gegenüber dem äußeren Mantelrohr 5 und das äußere Mantelrohr gegenüber dem als Konsole ausgebildeten Halteteil 6 festgelegt ist. In der Freigabestellung kann die zuvor beschriebene Verstellung erfolgen.

Außerdem kann die Lenksäule 1 eine Energieabsorptionseinrichtung umfassen, die in Fall einer unfallbedingten Kollision die durch den auf die Lenksäule aufprallenden Fahrzeugführer und dadurch eingetragene Energie absorbiert.

An einem Ende, dem hinteren Ende, ist die Lenkwelle 2 mit dem nicht dargestellten Lenkrad verbindbar. An dem anderen Ende ist ein Feedback-Aktuator 8 angeordnet, der über ein Getriebe auf die Lenkwelle 2 einwirkt. Der Feedback-Aktuator 8 umfasst einen Elektromotor, der die Lenkwelle 2 konzentrisch umgibt. Er dient dazu, die Rückwirkungen von der Fahrbahn auf ein Lenkrad zu simulieren und somit dem Fahrer eine Rückmeldung über das Lenk- und Fahrverhalten des Fahrzeugs zu geben.

Die Lenkwelle 2 ist bevorzugt teleskopierbar und weist neben einer Innenwelle eine die Innenwelle koaxial umgebende Außenwelle 202 auf. Das Innenprofil der Außenwelle 202 ist dabei komplementär zu einem Innenprofil der Innenwelle ausgebildet und erlaubt eine Drehmomentübertragung. Ein nicht dargestelltes Lenkrad kann an die Außenwelle 202 befestigt werden.

Am lenkradfernen Ende der Lenksäule 1 ist eine Umdrehungsbegrenzungseinrichtung 9 vorgesehen, die dazu ausgebildet, ein Verdrehen der Lenkwelle 2 zu begrenzen, d. h. sie bringt bei einem vordefinierten Drehwinkel die notwendige Kraft auf, um eine Rotation der Lenkwelle 2 zu verhindern.

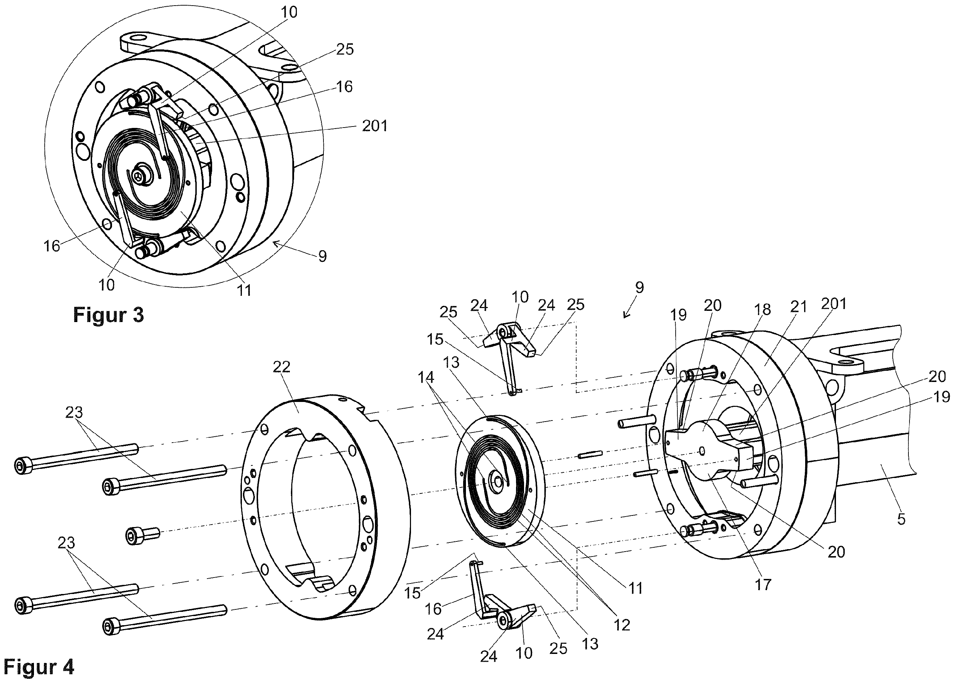

In den Figuren 3 bis 5 ist die Umdrehungsbegrenzungseinrichtung 9 im Detail dargestellt, wobei ein Verschlussdeckel zur Abdeckung und Abdichtung weg gelassen wurde. Sie umfasst zwei am äußeren Mantelrohr 5 schwenkbar befestigte Hebel 10, deren Schwenkbewegung jeweils durch eine auf einem mit der Innenwelle 201 drehfest verbundenen Kulissenträger 11 angeordnete spiralförmige Kulissenbahn 12 vorgegeben ist. Die beiden Kulissenbahnen 12 verlaufen ineinander, so dass sie sich nicht kreuzen. Jede Kulissenbahn 12 hat ein in Radialrichtung zur Längsachse der Lenkwelle 2 außen liegendes äußeres freies Ende 13 und ein in Radialrichtung innen liegendes inneres freies Ende 14. Die Radien der Kulissenbahnen 12 ändern sich erst kurz vor den Enden 13,14 schlagartig, bevorzugt ist dieser Radius im Ende der Kulissenbahn mindestens doppelt so groß wie ein Radius außerhalb des Endbereichs. Der Endbereich ist durch die letzten 30° des Lenkwinkels vor der Anschlagsituation definiert. Besonders bevorzugt ist die Änderung in einem Bereich von 10° des Lenkwinkels vor dem jeweiligen Ende mindestens 30%. Zu den äußeren Enden 13 hin steigen die Radien der beiden Kulissenbahnen 12 gleich an und zum inneren Ende 14 hin verringern sich die Radien der Kulissenbahnen 12 entsprechend.

Der Kulissenträger 11 ist eine kreisförmige Scheibe, die mit der inneren Lenkwelle 201 drehfest verbunden ist.

Die Kulissenbahnen 12 sind auf der lenkradfernen Stirnseite der Scheibe angeordnet. Sie sind jeweils durch eine in die Stirnseite eingebrachte Nut gebildet. Jeweils ein Kulissenstein 15 gleitet in einer Kulissenbahn 12. Die Kulissensteine 15 sind mit dem dazugehörigen Hebel 10 über ein als Ausleger ausgebildeten Verbindungselement 16 starr verbunden.

In der Figur 3 ist die Umdrehungsbegrenzungseinrichtung 9 ohne Gehäuseteil dargestellt. Die beiden Hebel 10 liegen sich in Umfangsrichtung um die Längsachse der Lenkwelle 2, außerhalb, aber in unmittelbarere Nähe zu dem Kulissenträger 11, gegenüber. Sie weisen jeweils das Verbindungselement 16 auf, an dem jeweils ein Kulissenstein in Form eines Stiftes gehalten ist. Der Kulissenstein ist jeweils in der dazugehörigen Kulissenbahn 12 verschiebbar gelagert. Durch eine Drehung der Lenkwelle relativ zum äußeren Mantelrohr und zum Kulissenträger 11, bewegt sich der Kulissenstein derart in der Kulissenbahn 12, das der mit dem Kulissenstein verbundene Hebel 10 kippt.

Die Verkippung der Hebel 10 wird in beide Drehrichtungen durch das durch Kulissenstein und Kulissenbahn gebildete Kurvengetriebe vorbestimmt.

Figur 4 zeigt im Detail die Umdrehungsbegrenzungseinrichtung 9. Auf der Lenkwelle 201 sitzt am lenkradfernen Ende das Anschlagbauteil 17, das mit dem Hebel 10 derart zusammenwirkt, dass diese miteinander in Wirkeingriff bringbar sind und somit eine weitere Verdrehung der Lenkwelle 2 verhindert.

Das Anschlagbauteil 17 weist einen kreisrunden Grundkörper 18 auf, der konzentrisch zur Innenwelle 201 an dieser drehfest befestigt ist. Ausgehend von dem Grundkörper 18 sind zwei sich in Umfangsrichtung gegenüberliegende Fortsätze 19 angeordnet, die von dem Grundkörper 18 in Radialrichtung nach außen abstehen. Die beiden etwa in Radialrichtung erstreckenden Seitenflächen eines jedes Fortsatzes 19 bilden Anschläge 20 für den Hebel 10 aus.

Auf der lenkwellenfernen Stirnseite des Anschlagbauteils 17 ist der Kulissenträger 11 angeordnet. Das Anschlagbauteil 17 und der Kulissenträger 11 sind drehfest miteinander verbunden. Die Kulissenbahn 12 ist auf der dem Anschlagbauteil 17 gegenüberliegenden, lenkradfernen Stirnseite des Kulissenträgers 11 angeordnet. Das Anschlagbauteil 17 und der Kulissenträger 11 sind von einem an dem äußeren Mantelrohr 5 befestigten Gehäuseteil 21 umfangseitig umgeben. An dem Gehäuseteil 21 sind die beiden sich gegenüberliegenden Hebel 10 verschwenkbar befestigt. Die Hebel 10 werden in ihrer axialen Lage durch ein weiteres Gehäuseteil 22 gehalten. Die beiden Gehäuseteile 21,22 bilden ein Gehäuse für die Umdrehungsbegrenzungseinrichtung 9 aus und sind mittels sich in Längsrichtung erstreckender Befestigungsmittel 23 fest miteinander verbunden.

Die beiden Hebel 10 sind identisch ausgebildet. Ein Hebel 10 weist zwei gleiche Schenkel 24 auf, die einen Winkel von etwa 120° einschließen. An einem der Schenkel 24 ist das Verbindungselement 16 angeordnet, das zu dem Schenkel 24 in einem Winkel zwischen 25° und 75° in einer Ebene senkrecht zur Längsachse orientiert ist. Am Ende des Verbindungselements 16 ist ein Stift 15 als Kulissenstein vorgesehen, der sich in Längsrichtung erstreckt und in die Kulissenbahn 12 eingreift und mit dieser in Form eines Kurvengetriebes zusammenwirkt. Der Hebel 10 ist verschwenkbar um eine Mitte zwischen den beiden Schenkeln 24 an dem Gehäuse gelagert. Durch eine Drehung der Lenkwelle 2 dreht sich der Kulissenträger 11 mit der spiralförmigen Kulissenbahn 12. Der Stift 15 ist in der Kulissenbahn 12 verfahrbar gehalten. Er bewegt sich mit der sich drehenden Bahn 12, was ein Verschwenken des Hebels 10 bewirkt. Die beiden Stirnseiten 25 der Schenkel 24 eines Hebels 10 bilden Gegenanschläge für die Anschläge 20 auf dem Anschlagbauteil 17 aus und begrenzen somit den Lenkwinkel.

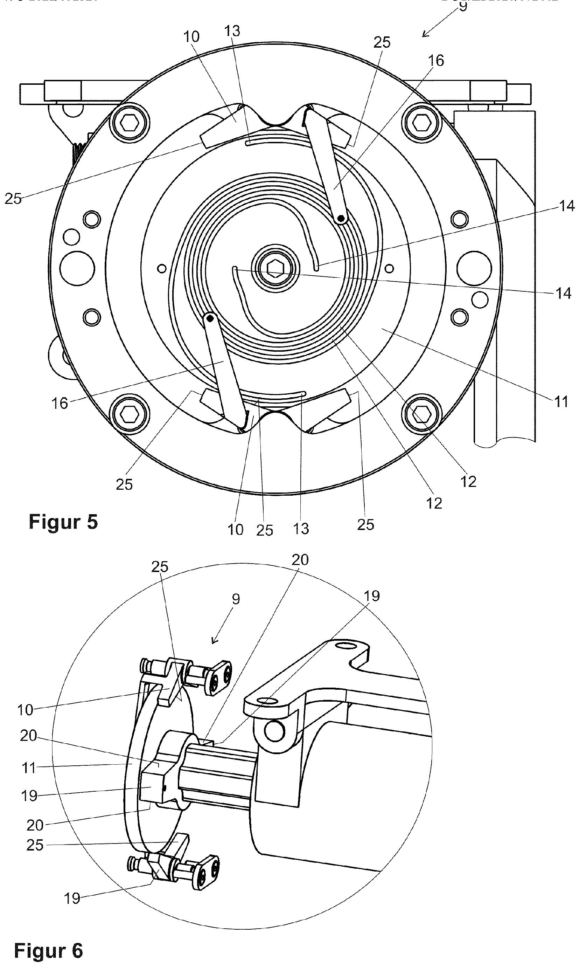

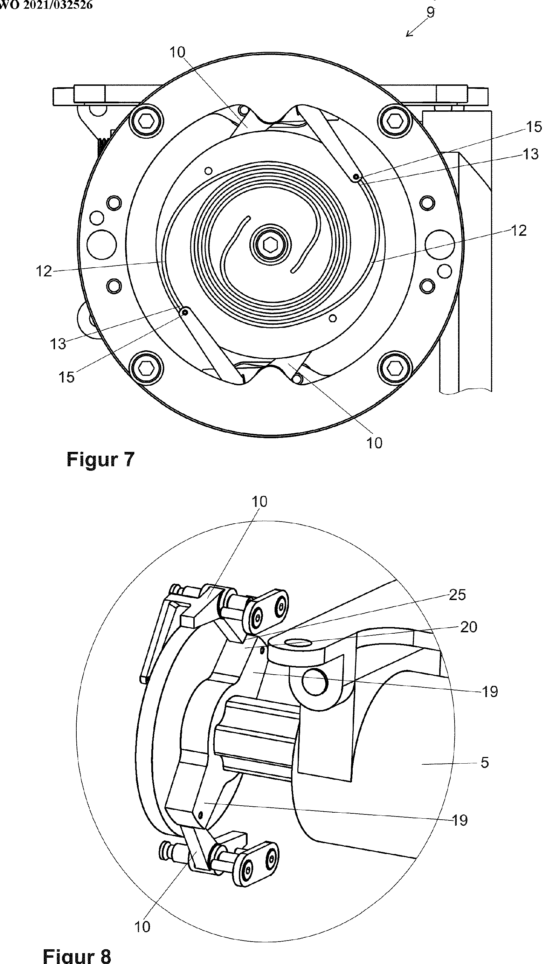

Die Figuren 5 und 6 zeigen die Umdrehungsbegrenzungseinrichtung 9 in einer Mittelstellung (Geradeausstellung) des Lenkrades bzw. der Lenkwelle 2. Die beiden Hebel 10 befinden sich jeweils in Umfangsrichtung mittig zwischen den beiden Fortsätzen 19 des Anschlagbauteils 17. Die Hebel 10 sind relativ zur Tangente der Rotationsachse in der Schwenkachse symmetrisch ausgerichtet. Die Hebel 10 können soweit verschwenkt werden, bis sie auf der einen oder anderen Seite der Fortsätze 19, den Anschlägen 20, an die Gegenanschläge 25 anstoßen und eine weitere Verdrehung blockiert ist. Bevorzugt beträgt der Lenkwinkel der Lenkwelle vom rechten Endanschlag zum linken Endanschlag zwischen 800° und 360°, besonders bevorzugt 630°. Die Figuren 7 und 8 zeigen einen Endanschlag der Umdrehungsbegrenzungseinrichtung 9. Der dargestellte Endanschlag ist der Anschlag beim Linksdrehen, auch Linksanschlag genannt. Beide Kulissensteine 15 befinden sich an den äußeren Enden 13 der jeweiligen Kulissenbahn 12. Die Hebel 10 schlagen mit den Gegenanschlägen 25 an den Anschlägen 20 der Fortsätze 19 an. Die Gegenanschläge 25 der Hebel 10 liegen dabei auf entgegengesetzten Seiten der beiden Fortsätze 19 an. Zwei Hebel 10 haben den Vorteil, dass das System weniger anfällig für Ausfälle ist (Redundanz) und die Kraft, die bei einem Endanschlag aufgebracht werden muss, sich gleichmäßig auf beide Hebel 10 aufteilt.

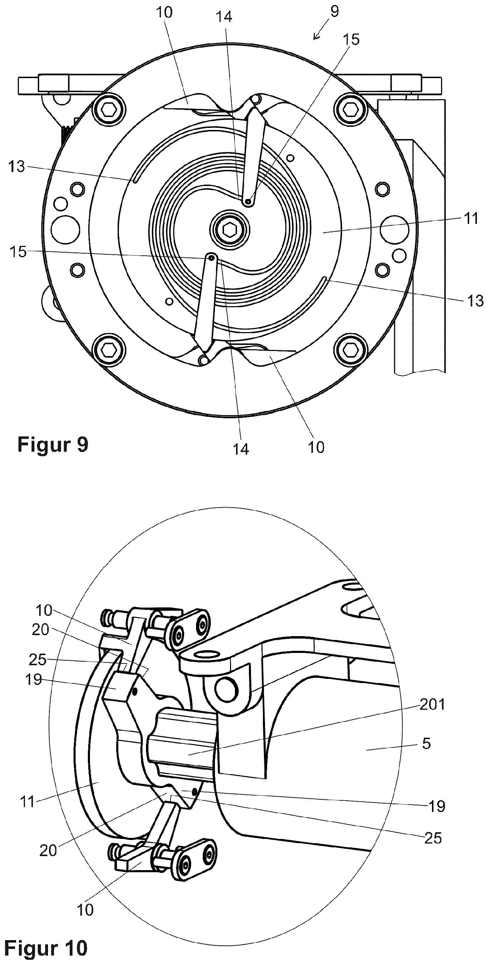

Die Figuren 9 und 10 zeigen den Rechtsanschlag der Umdrehungsbegrenzungseinrichtung 9. Beide Kulissensteine 15 befinden sich an den inneren Enden 14 der jeweiligen Kulissenbahn 12. Die Hebel 10 liegen mit ihren Gegenanschlägen 25 jeweils an einem Anschlag 20 der Fortsätze 19 in Anlage. Die Gegenanschläge 25 beider Hebel 10 liegen dabei auf entgegengesetzten Seiten der beiden Fortsätze 19.

Bevorzugt kann ein Dämpfungskörper vorgesehen sein, der wenigstens an einem der Anschläge und/oder der Gegenanschläge vorgesehen ist, um ein Anschlagen zu dämpfen. Ein solcher Dämpfungskörper kann aus einem Kunststoff und/oder einem Elastomer gebildet sein.

Die Umdrehungsbegrenzungseinrichtung weist eine geringe Toleranzanfälligkeit und einen ruhigen geräuscharmen Lauf auf.

## Patentansprüche

1. Lenksäule (1) für ein Kraftfahrzeug umfassend eine Lenkwelle (2), die in einer Lenkwellenlagereinheit (3) drehbar gelagert ist, und eine Umdrehungsbegrenzungseinrichtung (9), die dazu eingerichtet ist, ein Verdrehen der Lenkwelle (2) zu begrenzen, wobei die Umdrehungsbegrenzungseinrichtung (9) einen an einem Ende der Lenkwelle (2) befestigten Kulissenträger (11) mit wenigstens einer spiralförmigen Kulissenbahn (12) aufweist, und wobei in der wenigstens einen Kulissenbahn (12) ein Kulissenstein (15) verlagerbar geführt ist, wobei der Kulissenstein (15) mit einem Hebel (10) gekoppelt ist, der verkippbar an der Lenkwellenlagereinheit (3) gehalten ist, **dadurch gekennzeichnet, dass** der Hebel (10) wenigstens einen Gegenanschlag (25) aufweist, der mit einem an der Lenkwelle (2) befestigten Anschlagbauteil (17) zur Drehbegrenzung der Drehung der Lenkwelle (2) in Wirkeingriff bringbar ist.

2. Lenksäule nach Anspruch 1, **dadurch gekennzeichnet, dass** das Anschlagbauteil (17) auf der kulissenbahnfernen Seite des Kulissenträgers (11) angeordnet ist und einen zylindrischen Grundkörper (18) mit wenigstens einem Fortsatz (19) aufweist, der einen Anschlag (20) ausbildet.

3. Lenksäule nach Anspruch 1 oder 2, **dadurch gekennzeichnet, dass** der Kulissenträger (11) zwei spiralförmige Kulissenbahnen (12) aufweist, wobei in jeder der beiden Kulissenbahnen (12) ein Kulissenstein (15) verschiebbar geführt ist, der jeweils an einem Hebel (10) befestigt ist und wobei beide Hebel (10) verkippbar an der Lenkwellenlagereinheit (3) gehalten sind.

4. Lenksäule nach einem der vorhergehenden Ansprüche, **dadurch gekennzeichnet, dass** ein Hebel (10) zwei Gegenanschläge (25) aufweist, wobei jeder nur in einer Drehrichtung mit dem Anschlagbauteil (17) in Wirkeingriff bringbar ist, derart, dass die Verdrehung der Lenkwelle (2) in beide Richtungen begrenzt ist.

5. Lenksäule nach einem Anspruch 3 oder 4, **dadurch gekennzeichnet, dass** sich die beiden Hebel (10) in Umfangsrichtung um die Lenkwelle (2) gegenüberliegen und derart mit der jeweiligen Kulissenbahn (12) zusammenwirken, dass beide Hebel (10) mit ihrem Gegenanschlag (25) bei demselben Drehwinkel der Lenkwelle (2) mit jeweils einem Anschlag (20) des Anschlagbauteils (17) in Wirkeingriff bringbar sind.

6. Lenksäule nach einem der vorhergehenden Ansprüche 3 bis 5, **dadurch gekennzeichnet, dass** das Anschlagbauteil (17) zwei Fortsätze (19) mit jeweils zwei gegenüberliegenden Anschlägen (20) aufweist, so dass die Verdrehung der Lenkwelle (2) für beide Hebel (10) jeweils in beide Richtungen begrenzt ist.

7. Lenksäule nach einem der vorhergehenden Ansprüche, **dadurch gekennzeichnet, dass** der Kulissenstein (15) als ein stiftförmiges Element ausgebildet ist.

8. Lenksäule nach Anspruch 7, **dadurch gekennzeichnet, dass** das stiftförmige Element (15) mit dem Hebel (10) und den Gegenanschlägen (25) als ein einstückiges integrales Bauteil ausgebildet ist.

9. Lenksäule nach einem der vorhergehenden Ansprüche, **dadurch gekennzeichnet, dass** an den Anschlägen (20) des Anschlagbauteils (11) und/oder den Gegenanschlägen (25) ein Dämpfungskörper angeordnet ist.

10. Lenksäule nach Anspruch 9, **dadurch gekennzeichnet, dass** der Dämpfungskörper aus einem Kunststoff und/oder einem Elastomer gebildet ist.

11. Steer-by-Wire-Lenksystem eines Kraftfahrzeuges mit einer Lenksäule (1) nach einem der vorhergehenden Ansprüche 1 bis 10.

## Claims

1. A steering column (1) for a motor vehicle comprising a steering shaft (2) which is mounted rotatably in a steering shaft bearing unit (3), and a rotation limitation device (9) which is set up to limit a rotation of the steering shaft (2), the rotation limitation device (9) having a slotted guide carrier (11) which is fastened to one end of the steering shaft (2) and has at least one spiral slotted guide track (12), and a sliding block (15) being guided movably in the at least one slotted guide track (12), wherein the sliding block (15) is coupled to a lever (10) which is held tiltably on the steering shaft bearing unit (3), **characterized in that** the lever (10) has at least one counterstop (25) which can be brought into operative engagement with a stop component (17) which is fastened to the steering shaft (2), for rotation limitation of the rotation of the steering shaft (2).

2. The steering column as claimed in claim 1, **characterized in that** the stop component (17) is arranged on that side of the slotted guide carrier (11) which is remote from the slotted guide track, and has a cylindrical main body (18) with at least one projection (19) which configures a stop (20).

3. The steering column as claimed in claim 1 or 2, **characterized in that** the slotted guide carrier (11) has two spiral slotted guide tracks (12), a sliding block (15) being guided displaceably in each of the two slotted guide tracks (12), which sliding block (15) is fastened in each case to a lever (10), and the two levers (10) being held tiltably on the steering shaft bearing unit (3).

4. The steering column as claimed in one of the preceding claims, **characterized in that** a lever (10) has two counterstops (25), each of which can be brought into operative engagement with the stop component (17) only in one rotational direction in such a way that the rotation of the steering shaft (2) is limited in the two directions.

5. The steering column as claimed in claim 3 or 4, **characterized in that** the two levers (10) lie opposite one another in the circumferential direction around the steering shaft (2), and interact with the respective slotted guide track (12) in such a way that the two levers (10) can be brought into operative engagement by way of their counterstop (25) with in each case one stop (20) of the stop component (17) at the same rotational angle of the steering shaft (2).

6. The steering column as claimed in one of the preceding claims 3 to 5, **characterized in that** the stop component (17) has two projections (19) with in each case two stops (20) which lie opposite one another, with the result that the rotation of the steering shaft (2) is limited for the two levers (10) in each case in the two directions.

7. The steering column as claimed in one of the preceding claims, **characterized in that** the sliding block (15) is configured as a pin-shaped element.

8. The steering column as claimed in claim 7, **characterized in that** the pin-shaped element (15) is configured with the lever (10) and the counterstops (25) as a single-piece integral component.

9. The steering column as claimed in one of the preceding claims, **characterized in that** a damping body is arranged on the stops (20) of the stop component (11) and/or the counterstops (25).

10. The steering column as claimed in claim 9, **characterized in that** the damping body is formed from a plastic and/or an elastomer.

11. A steer-by-wire steering system of a motor vehicle with a steering column (1) as claimed in one of the preceding claims 1 to 10.

## Revendications

1. Colonne de direction (1) pour un véhicule automobile, comprenant un arbre de direction (2) qui est monté de manière rotative dans une unité de palier d'arbre de direction (3), et un dispositif de limitation de rotation (9) qui est conçu pour limiter une rotation de l'arbre de direction (2), le dispositif de limitation de rotation (9) présentant un support de coulisse (11) fixé à une extrémité de l'arbre de direction (2) avec au moins une piste de coulisse (12) en forme de spirale, et un coulisseau (15) étant guidé de manière déplaçable dans l'au moins une piste de coulisse (12), le coulisseau (15) étant couplé à un levier (10) qui est maintenu de manière basculante sur l'unité de palier d'arbre de direction (3), **caractérisée en ce que** le levier (10) présente au moins une contre-butée (25) qui peut être mise en prise active avec un composant de butée (17) fixé sur l'arbre de direction (2) pour limiter la rotation de l'arbre de direction (2).

2. Colonne de direction selon la revendication 1, **caractérisée en ce que** le composant de butée (17) est agencé sur le côté du support de coulisse (11) éloigné de la piste de coulisse et présente un corps de base cylindrique (18) avec au moins un prolongement (19) qui forme une butée (20) .

3. Colonne de direction selon la revendication 1 ou 2, **caractérisée en ce que** le support de coulisse (11) présente deux pistes de coulisse (12) en forme de spirale, un coulisseau (15) étant guidé de manière coulissante dans chacune des deux pistes de coulisse (12), lequel est fixé respectivement à un levier (10) et les deux leviers (10) étant maintenus de manière basculante sur l'unité de palier d'arbre de direction (3) .

4. Colonne de direction selon l'une quelconque des revendications précédentes, **caractérisée en ce qu'**un levier (10) présente deux contre-butées (25), chacune ne pouvant être mise en prise active avec le composant de butée (17) que dans une direction de rotation, de telle sorte que la rotation de l'arbre de direction (2) est limitée dans les deux directions.

5. Colonne de direction selon la revendication 3 ou 4, **caractérisée en ce que** les deux leviers (10) sont opposés l'un à l'autre dans la direction périphérique autour de l'arbre de direction (2) et coopèrent avec la piste de coulisse (12) respective de telle sorte que les deux leviers (10) peuvent être mis en prise active avec leur contre-butée (25) avec le même angle de rotation de l'arbre de direction (2) avec une butée (20) respective du composant de butée (17).

6. Colonne de direction selon l'une quelconque des revendications précédentes 3 à 5, **caractérisée en ce que** le composant de butée (17) présente deux prolongements (19) ayant chacun deux butées (20) opposées, de telle sorte que la rotation de l'arbre de direction (2) est limitée dans les deux directions pour les deux leviers (10) .

7. Colonne de direction selon l'une quelconque des revendications précédentes, **caractérisée en ce que** le coulisseau (15) est configuré sous la forme d'un élément en forme de tige.

8. Colonne de direction selon la revendication 7, **caractérisée en ce que** l'élément en forme de tige (15) est configuré avec le levier (10) et les contre-butées (25) sous la forme d'un composant intégral d'une seule pièce.

9. Colonne de direction selon l'une quelconque des revendications précédentes, **caractérisée en ce qu'**un corps d'amortissement est agencé sur les butées (20) du composant de butée (11) et/ou sur les contre-butées (25).

10. Colonne de direction selon la revendication 9, **caractérisée en ce que** le corps d'amortissement est formé d'une matière plastique et/ou d'un élastomère.

11. Système de direction à commande électrique d'un véhicule automobile avec une colonne de direction (1) selon l'une quelconque des revendications 1 à 10 précédentes.
